(19) Europäisches Patentamt / European Patent Office / Office européen des brevets

(11) **EP 3 633 421 A1**

(12) **EUROPEAN PATENT APPLICATION**

(43) Date of publication:
**08.04.2020 Bulletin 2020/15**

(51) Int Cl.:
**G02B 5/18** (2006.01)     **G02B 1/00** (2006.01)
**G02B 1/04** (2006.01)

(21) Application number: **18198053.3**

(22) Date of filing: **01.10.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **InterDigital CE Patent Holdings**
**75017 Paris (FR)**

(72) Inventor: **BORISKIN, Artem**
**35576 CESSON SEVIGNE (FR)**

(74) Representative: **Vidon Brevets & Stratégie**
**16B, rue de Jouanet**
**BP 90333**
**35703 Rennes Cedex 7 (FR)**

Remarks:
The references to the drawing(s) no. 11d are deemed to be deleted (Rule 56(4) EPC).

(54) **EFFECTIVE REFRACTIVE INDEX BASED DEVICE FOR FORMING AT LEAST ONE FOCUSED BEAM IN THE NEAR ZONE, FROM INCIDENT ELECTROMAGNETIC WAVES**

(57) The disclosure relates to an optically-transparent device (ML) configured for forming at least one focused beam (NJ) in a near field zone from an electromagnetic wave (EM) incidentally illuminating said device, when it is embedded in a dielectric host medium. The device comprises at least one portion ($P_{eff}$) of a composite dielectric material, formed by inclusions of a first dielectric material having a first refractive index $n_1$ into a second dielectric material having a second refractive index $n_2$ different from $n_1$, a dimension of each inclusion in at least one direction being smaller than $\lambda/2$, $\lambda$ being the wavelength of said electromagnetic wave in the dielectric host medium, so that said composite dielectric material has an effective refractive index $n_{eff}$ defined as a function of said first and second refractive indexes and of a fill factor of said first dielectric material within said second dielectric material. At least one of the focused beams originates from an edge between a bottom surface and a lateral surface of said at least one portion of a composite dielectric material, the bottom surface being defined with respect to an arrival direction of the electromagnetic wave.

Fig. 3

**Description**

**1. Field of the disclosure**

The present disclosure relates generally to techniques for forming field intensity patterns from electromagnetic waves, among which visible light. More particularly, but not exclusively, the present disclosure relates to techniques for near-field focusing and beam forming in the near field zone. By near field zone, it is meant here, and throughout this document, a region around a device according to the present disclosure, whose dimensions can extend from a fraction of the wavelength to about ten wavelengths in the host medium. It may not obviously be limited to the non-radiative (reactive) zone but can also comprise the Fresnel radiative, the transition, and partly the far-field zones, depending on the size of the device.

**2. Background**

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Microlenses are essential building blocks of many optical systems. They are used to correct the phase front of electromagnetic waves incident on a given surface in order to focus light into a given point in space or to collimate it along an optical line-of-sight between a transmitter and receiver. Dimensions of microlenses may vary from hundreds to about one micron, which makes their fabrication, integration, and alignment in an optical device rather challenging. Moreover, the focusing ability of standard refractive and diffractive lenses decreases drastically with dimensions, thus affecting efficiency of the entire optical system. Such a drawback is linked to the operational principles of the microlenses and thus constitutes a fundamental limitation.

To overcome this limitation, a new family of so-called nanojet microlenses has been proposed, as described for example in **Patent document** EP3223063. Unlike the refractive and diffractive lenses, operational principle of nanojet microlenses is based on an edge diffraction phenomenon, which leads to an abrupt deformation of the electromagnetic wave phase front in a close vicinity of the edge. More particularly, such an edge is formed by a step of refractive index in a dielectric microstructure, and gives rise to a diffraction phenomenon, which is in turn coupled to refraction and interference phenomena. This allows generating condensed beam(s) of radiation - referred to as nanojet beam(s) - in the near zone, when the dielectric microstructure is illuminated by a plane wave, depending on the shape and dimensions of the structure. Such an edge can for example be associated with a bottom surface of a dielectric microstructure, e.g. dielectric cylinder, cone, or prism with an arbitrary cross-section. It can also correspond to the edge of a cavity made in a dielectric host medium.

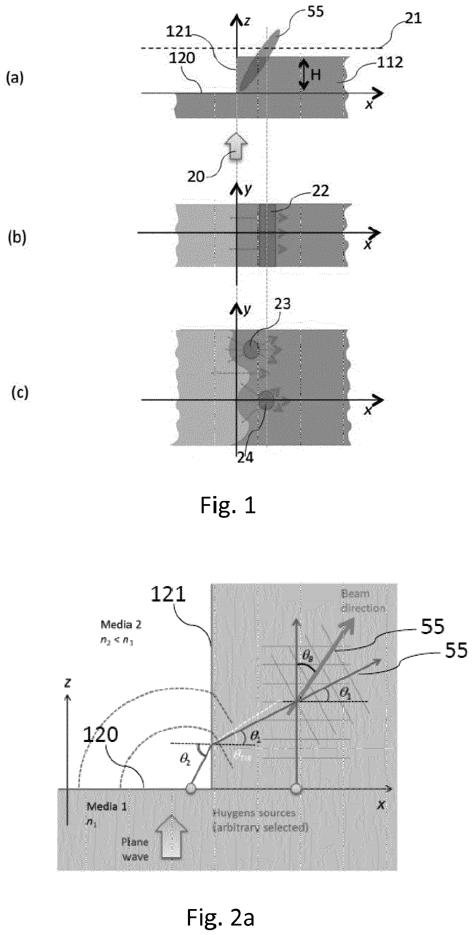

**Figure 1** illustrates an example of an abrupt change occurring in the level of the surface of a dielectric layer 112, thus forming a step in the layer that can give birth to nanojet beams. Figure 1a shows a side view of the dielectric layer 112. Figures 1b and 1c respectively show top views in case of a step with a straight (figure 1b) and curved (figure 1c) edge lines. As shown in figure 1a, the device is illuminated by an incident electromagnetic wave 20, coming from the base of the device and orthogonal to the base surface of the dielectric layer 112, along the z-axis. As schematically shown by the dashed arrows in figures 1b and 1c, a nanojet beam 55 originates from the base edge of the step, which comprises a bottom surface 120 (with respect to the arrival direction of the electromagnetic wave 20) and a lateral surface 121 (which may also be tilted with respect to the z-axis). Spots referenced 22 to 24 indicate the corresponding hot spots in the near-field distribution formed in the imaging plane. The specific field distribution with two hot spots 23, 24 observed in figure 1c is associated with the shape of the edge line with two concave segments responsible for the formation of two independent nanojet beams.

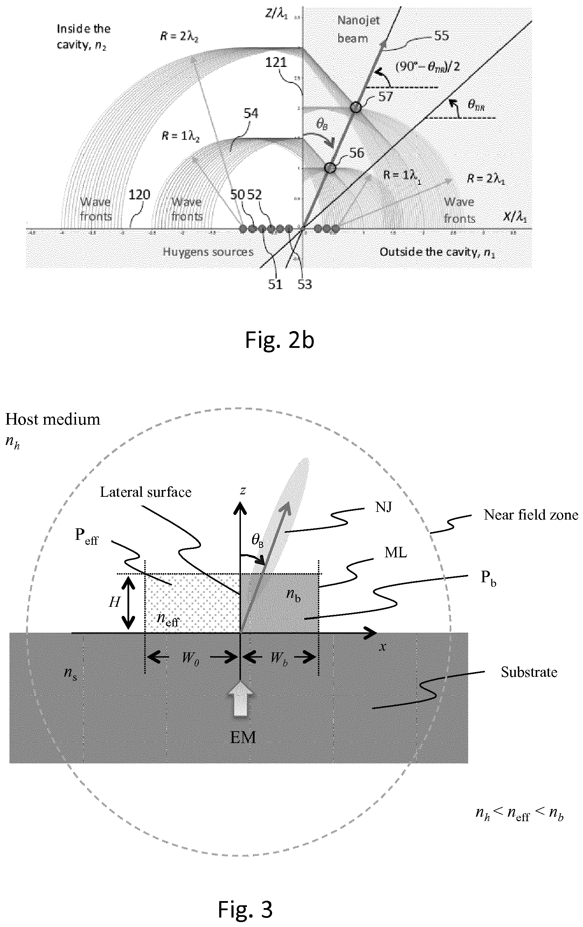

The origins of the nanojet beams can be explained by the combination of three electromagnetic phenomena, which occur in the vicinity of the abrupt change of level in the surface of the dielectric material. A schematic drawing illustrating these phenomena occurring in the vicinity of a cavity edge line is presented in relation with **figures 2a and 2b**, namely:

- diffraction on the index-step discontinuity associated with the base 120 (i.e. bottom surface) of the cavity (or, more generally with the surface of lower level of a step formed in the host medium);
- refraction of the diffracted wave at the lateral surface 121 of the cavity (or more generally at the lateral surface of the step); and
- interference of the refracted wave and the incident plane wave outside the cavity (or more generally in the host medium).

In the example of figure 2a and 2b, the host medium (referred to as Medial) is an optically transparent non-dispersive dielectric material having a refractive index $n_1$ higher than the refractive index $n_2$ of the medium filling the cavity (referred to as Media2). For example, Media 1 has a refractive index $n_1$=1.49 (e.g. plastic or glass) and the cavity is filled with vacuum ($n_2$=1) or air ($n_2 \approx 1$). The incident plane wave arrives from below in the diagrams.

The key elements of the complex electromagnetic phenomena illustrated in figures 2a and 2b are the following:

- The incident plane wave induces equivalent currents at the dielectric-air boundary 120 associated with the cavity base (or more generally when reaching the step of index in the host medium induced by the abrupt change of level in its surface);
- These induced currents are considered as Huygens secondary sources 50 to 53;
- In line with the diffraction theory, the spherical waves 54 radiated by the Huygens sources cause some power leakage towards the 'shadow region', i.e. towards the lateral boundary 121 of the cavity;
- While crossing the lateral boundary 121, the waves radiated by the Huygens sources experience refraction that causes a tilt of the refracted wave on a certain angle in accordance with the Snell-Descartes's law.
- In figure 2b, it can be notice that outside the cavity the wave fronts coincide for different Huygens source positions along the cavity base line, thus creating a local field enhancement. The planar shape of these fronts evidences for the creation of a directive beam propagating out of the cavity.
- Finally, outside the cavity the refracted wave is constructively interfering 56, 57 with the plane wave incident from below giving rise to the nanojet beam 55.

The nanojet beam creation is hence explained by phenomena that are non-dispersive in nature, namely (i) edge diffraction, (ii) refraction of the wave at the interface of two dielectric media, and (iii) interference. This explains why the shape of the beam and its radiation angle remain stable versus wavelength.

Moreover, for the case of a normal incidence of a plane wave on the base of the cavity, the nanojet beam radiation angle $\theta_B$ is defined by the Snell's law and, thus, only as a function of two parameters:

(i) ratio between the refraction indexes of the host media and cavity materials, and
(ii) the base angle of the prismatic cavity.

Last, the nanojet beam-forming phenomenon is associated with the edge (not a full aperture) of the cavity.

For sake of simplicity, in the foregoing, we only consider a prismatic cavity with the base angle equal 90°, thus having vertical edges.

As follows from figure 2b, the main contribution to the formation of the planar wave front of the refracted wave outside the cavity comes from the Huygens sources 50-53 located close to the lateral edge 121 of the cavity. Because of this, the refraction angle of the wave radiated outward the cavity is close to the critical angle for the wave incident on the same boundary from outside (figure 2a):

$$(Eq.\ 1) \qquad \theta_1 \approx \theta_{TIR}, \text{ where } \theta_{TIR} = sin^{-1}(n_2/n_1) \text{ is the critical angle.}$$

The nanojet beam 55 is finally created as a result of the interference between the refracted wave and the plane wave incident from below, the angle of radiation of the nanojet beam $\theta_B$ is defined by a vector sum of the two waves as schematically shown in figure 2a. These considerations lead one to the following approximate formula for the radiation angle of the nanojet beam:

$$(Eq.\ 2) \qquad \theta_B \approx (90° - \theta_{TIR})/2$$

It follows from the above that performance characteristics of nanojet microlenses are defined by the ratio of indexes at the lateral surface of the microstructure (i.e. nanojet microlenses), shape of the lens edge line, and base angle of the lens lateral surface. Such a mechanism is different from the one which governs the operation of standard refractive and diffractive microlenses. For example, the focal length of the nanojet microlens is not defined as a function of the radius of curvature of a lens, as in case of a refractive microlens. Such independence of the nanojet microlens characteristics from the shape of the lens surface is of interest, since it allows for design of flat nanojet microlenses with arbitrary cross-section and wavelength-scale dimensions, which facilitates their fabrication and their integration in an optical system. On the other hand, however, independence of the nanojet beam forming mechanism from the shape of the lens surface deprives one of a mean to control the focal length of the nanojet microlenses. In fact, available solutions to finely tune nanojet lens performance characteristics - such as focal length, nanojet beam direction, and focusing efficiency - are rather limited. Furthermore, among available solutions, some are not always acceptable for various practical reasons such as cost, feasibility, fabrication process, etc. For example, the choice of material and slope/shape of the lateral surface of the lens is usually determined by the fabrication process: changing the base angle of the nanojet structure and/or its material is thus not always possible, or too costly. As a result, at present, the only easy adaptable parameter for the control over the focal length of a nanojet microlens is the size/shape of the lens bottom (e.g. radius of a cylindrical pillar). However, in some applications, such as image-sensors design involving array of microlenses, changing the size/shape of the microlenses may not be feasible. This lack of means for the adjustment of the focal length thus causes difficulties with integration of nanojet microlenses at a system level.

Another problem, which is also a corollary of the nanojet lens operational principle, is the limited focusing efficiency of nanojet microlenses. This problem is due to the fact that the effective aperture of nanojet microlens is determined by the length of the base edge line instead of the surface as in the case of refractive/diffractive microlenses. Thus, being well pronounced and dominant for lenses with wavelength-scale dimensions, the nanojet focusing phenomenon rapidly loses its significance for lenses with diameter larger than a few wavelengths and is finally masked by the Fresnel-type diffraction pattern caused by the interference between the wave passing through the lens and outside the lens. A solution to overcome this limitation and enable high focusing efficiency relies on generation and recombination of multiple nanojet beams associated with a plurality of step-like discontinuities implemented in a nanojet beam forming structure. However, in many cases, realization of this operational principle requires the use of dielectric materials with specific values of refractive index, which is not always feasible due to a limited set of optically-transparent dielectric materials - and thus of refractive indexes - available in the visible range.

Finally, for some applications there is a need to vary performance characteristics of different focusing elements in an array depending on their position, which is a typical scenario for image sensors with different illumination conditions provided for central and peripheral pixels. To compensate for the tolerance of the fabrication and alignment process, it is important to minimize the number of steps in the fabrication process. Thus, it is often preferable to fabricate the entire array structure in one material, rather than mixing different materials. This imposes strong limitations on the design of microlenses. Nanojet microlenses have a potential to complement or even replace standard refractive microlenses in image sensors thanks to their more attractive form factor, which is compatible with lithography techniques and whose fabrication does not require a melting phase. However, limited flexibility in the design of single-material nanojet microlenses may not allow for effective harvesting of the light incident from the full surface of the pixel. Single-material microlenses may also have limited degree of adaptability for different illumination conditions intrinsic to central and peripheral pixels.

Based on the above, one can conclude that it would be desirable to provide a new technique for forming focused optical beams in the near zone from an electromagnetic wave, which would not present these drawbacks of prior art. More particularly, there is a need for new nanojet microlens components that provide additional means for optimization of nanojet beam performance, while at the same time remaining easy to manufacture.

## 3. Summary

According to an aspect of the present disclosure, an optically-transparent device is disclosed. Such a device is configured for forming at least one focused beam in a near field zone of said device from an electromagnetic wave incidentally illuminating the device, when said device is embedded in a dielectric host medium. Said device comprises at least one portion of a composite dielectric material, formed by inclusions of a first dielectric material having a first refractive index $n_1$ into a second dielectric material having a second refractive index $n_2$ different from the first refractive index $n_1$. A dimension of each of said inclusions in at least one direction is smaller than $\lambda/2$, $\lambda$ being the wavelength of said electromagnetic wave in said dielectric host medium, so that said composite dielectric material has an effective refractive index $n_{eff}$ defined as a function of said first and second refractive indexes and as a function of a fill factor of said first dielectric material within said second dielectric material. Furthermore, the device is arranged so that at least one of said at least one focused beam originates from an edge between a bottom surface and a lateral surface of said at least one portion of a composite dielectric material, the bottom surface being defined with respect to an arrival direction of said electromagnetic wave.

In that way, a new design of nanojet microlens is proposed, which offers more flexibility to finely tune nanojet lens performance characteristics. Indeed, the use of a composite dielectric material as proposed - in line with the concept known as effective index model - provides additional degree of freedom for the design and fabrication of nanojet microlenses, making it possible to overcome constraints of prior art nanojet microlenses associated with the limited set of available standard dielectric materials having different refractive indexes. In particular, it gives access to an extended-range of index ratio at a diopter between the proposed composite dielectric material and another dielectric material, and thus, incidentally, to an extended-range of possible radiation angles for the generated nanojet beams. In that way, the characteristics of the generated nanojet beams - such as nanojet beam direction, focal length, and focusing efficiency - can be better controlled. More particularly, since the composite dielectric material can be obtained from standard dielectric material, the proposed technique makes it possible to modify the focal length of a fixed-size nanojet micro lens made of a standard dielectric material.

According to an embodiment, a width $W_0$ of said at least one portion of a composite dielectric material is configured so that $\lambda/2 \leq W_0 \leq 10\lambda$.

In that way, the dimensions of the microlens is arranged so that the nanojet-beam phenomenon is dominant over the Fresnel diffraction phenomenon.

According to an embodiment said inclusions take the form of grooves, through-holes, or cavities within said second dielectric material, said grooves, holes, or cavities being filed with said first dielectric material.

In that way, the refractive index of a bulk dielectric material (the second dielectric material) can be modified so as to obtain a composite dielectric material having a desired effective refractive index, by varying the size, shape and spacing of the grooves, through-holes, or cavities. The first dielectric material may for example be the air, in which case the refractive index of a bulk dielectric material is even more easily adaptable, by creating hollow grooves, through-holes, or cavities within the mass of the dielectric material.

According to a particular feature of this embodiment, said inclusions take the form of substantially spherical cavities randomly distributed within said second dielectric material, the diameter of each of said cavities being smaller than $\lambda/2$.

In that way, a simple Volume Averaging Theory can be used so as to define the effective refractive index of the composite dielectric material.

According to another embodiment, said composite dielectric material is a stratified medium, the inclusions taking the form of layers of said first dielectric material interleaved between layers of said second dielectric material.

In that way, it is possible to obtain a composite dielectric material whose effective refractive index depends not only on the structure of the layers (material, thickness, etc.), but also on the polarization of the electromagnetic wave illuminating the device. Such a stratified medium is intrinsically birefringent, thus providing additional flexibility in the design of complex nanojet structures.

According to a particular feature of this embodiment, said stratified medium is configured so that $W_1+W_2 < \lambda/\max(n_1,n_2)$, where $W_1$ and $W_2$ corresponds respectively to the thickness of each layer of said first dielectric material and to the thickness of each layer of said second dielectric material.

In that way, the wavelength of the incident electromagnetic wave is much larger than the period $W_1+W_2$ of the stratified medium, and the stratified medium thus operates in deep-sub-wavelength regime where its effective refractive indexes (for TE and TM polarizations) are well defined by the effective index model.

According to an embodiment, said first dielectric material belongs to the group comprising:

- glass;
- plastic;
- a polymer material;
- a liquid;
- a gas.

According to an embodiment, said second dielectric material belongs to the group comprising:

- glass;
- plastic;
- a polymer material.

Such a device can hence be fabricated using standard dielectric materials, which are easy to find and inexpensive.

According to an embodiment, said device comprises at least another portion of a dielectric material, at least a surface of said another portion being in contact with a surface of said one portion of a composite dielectric material, and said another portion having a refractive index different from the effective refractive index $n_{eff}$ of said one portion of a composite dielectric material.

In that way, the proposed technique can be used in the implementation of complex multi-material nanojet-based beam-forming structures, whose operational principle relies for example on generation and recombination of multiple nanojet beams associated with multiple step-like discontinuities.

According to a particular feature of this embodiment, said another portion of a dielectric material is made of one of the first or second dielectric material.

In that way, the fabrication of such complex nanojet microlenses is simplified. Indeed, a nanojet-based beam-forming structure comprising a plurality of counterparts with different refractive indexes can for example easily be obtained from a single dielectric bulk material, by creating grooves, through-holes, or cavities only in some targeted portion of said bulk material.

According to another aspect of the present disclosure, a system is disclosed which comprises a dielectric host medium and at least one optically-transparent device according to any one of the embodiments cited above embedded into said dielectric host medium.

According to an embodiment, said dielectric host medium is in a solid state, the at least one portion of a composite dielectric material of said optically-transparent device is formed by arranging a plurality of cavities within said dielectric host medium.

According to another embodiment, said system further comprises a dielectric substrate acting as a support layer, and said at least one optically-transparent device according to any one of the embodiments cited above is placed on said dielectric substrate.

According to an embodiment of the present disclosure, said system comprises a plurality of optically-transparent devices according to any one of the embodiments cited above, said optically-transparent devices being uniformly distributed within said dielectric host medium so as to form a regular two-dimensional or three dimensional pattern.

In that way, according to these aspects of the present disclosure, it is notably possible to form structures allowing gar-field applications. For example, a non-complicated diffraction grating (i.e. easy to manufacture compared to conventional diffraction grating) having high diffraction efficiency may be formed, by uniformly distributing a plurality of the proposed optically-transparent devices within a dielectric host medium.

It is to be understood that both the foregoing general description and the following detailed description are exemplary and explanatory and are not restrictive of the disclosure, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

### 4. Brief description of the drawings

Embodiments of the present disclosure can be better understood with reference to the following description and drawings, given by way of example and not limiting the scope of protection, and in which:

- **Figure 1,** already described in relation with prior art, is a schematic drawing of a nanojet beam produced by a dielectric layer with a step, with **figure 1a** a side view and **figures 1b** and **1c** top views according to two alternate embodiments of prior art;
- **Figures 2a** and **2b,** already described in relation with prior art, illustrate the complex electromagnetic phenomena involved in nanojet beams generation;
- **Figure 3** illustrates cross-section view of an effective refractive index based nanojet microlens according to an embodiment of the present disclosure;
- **Figures 4a** and **4b** illustrate two different ways for forming a composite dielectric material having an effective refractive index, according to embodiments of the present disclosure: a porous effective medium (figure 4a) and a stratified effective medium (figure 4b);
- **Figure 5** shows how the effective refractive index of a stratified effective medium varies as a function of the fill factor, according to an embodiment of the present disclosure;
- **Figure 6** illustrates cross section view of an effective refractive index based nanojet microlens implemented in the form of cavities created within a host medium, according to an embodiment of the present disclosure;
- **Figure 7a, 7b, 7c** and **7d** show simulation results illustrating the power density distribution of the nanojet beams generated with different configurations of the effective refractive index based nanojet microlens of figure 6, according to an embodiment of the disclosure;
- **Figure 8a** and **8b** correspond respectively to an enlarged view of figure 7c and 7d, with nanojet beams schematically highlighted by arrows;
- **Figure 9a** illustrates cross section view of an effective refractive index based nanojet microlens placed on a substrate layer, according to another embodiment of the present disclosure;
- **Figure 9b** illustrates cross section view of a bulk nanojet microlens of prior art, for comparison purpose with the effective refractive index based nanojet microlens of figure 9a;
- **Figure 10** shows dependence of the effective refractive index versus fill factor for a stratified medium comprises alternating dielectric layers having specific refractive indexes, according to an embodiment of the present disclosure;
- **Figure 11a, 11b, 11c** and **11d** show simulation results comparing the power density distribution of the nanojet beams generated by a bulk nanojet microlens according to figure 9b versus an effective refractive index based nanojet microlens according to figure 9a, for TE polarization of the incident electromagnetic wave, according to an embodiment of the disclosure;

- **Figure 12** shows simulation results comparing the power density distribution of the nanojet beams generated by a bulk nanojet microlens according to figure 9b versus an effective refractive index based nanojet microlens according to figure 9a, for TM polarization of the incident electromagnetic wave, according to an embodiment of the disclosure;
- **Figure 13** and **14** illustrate cross views of various possible implementations of an effective refractive index based nanojet microlens, according to an embodiment of the disclosure.

The components in the figures are not necessarily to scale, emphasis instead being placed upon illustrating the principles of the disclosure.

## 5. Detailed description

### 5.1 General principle

The present disclosure relates to a new technical solution for the design of near-field focusing devices, and more particularly of nanojet microlenses. As described in relation with prior art, a nanojet microlens is an optically-transparent device configured for forming at least one focused optical beam in a near field zone of the device, from an electromagnetic wave incidentally illuminating said device when it is embedded in a dielectric host medium. As it will be described throughout the present disclosure, the proposed microlens device topology enables fine-tuning of the nanojet lens performance characteristics, such as nanojet beam direction, focal length, and focusing efficiency (i.e. field intensity enhancement). Furthermore, the proposed technique paves the way for simple fabrication of multi-material nanojet microlenses, comprising two or more regions with different refractive indexes, and whose performance may involve recombination of a plurality of nanojet beams associated with a plurality of step-like discontinuities in single-layer or multi-layer dielectric microstructures. Step-like discontinuity is to be understood as a rapid change of refractive index along a line orthogonal to the incident wave propagation direction, and may be associated, for example, with an edge of a dielectric rib or cylinder.

According to the general principle of the disclosure, such desired effects can be achieved by using a composite dielectric material in the design of nanojet microlenses, the composite dielectric material having particular characteristics that will be described hereafter. More particularly, the disclosure pertains to a new type of nanojet microlens comprising at least one portion of a composite dielectric material, formed by inclusions of a first dielectric material having a first refractive index $n_1$ into a second dielectric material having a second refractive index $n_2$ different from the first refractive index $n_1$. According to the proposed technique, a dimension of each of said inclusions in at least one direction is smaller than $\lambda/2$, where $\lambda$ is the wavelength of the electromagnetic wave in the dielectric host medium. First and second dielectric materials belong for example to the group comprising glass, plastic, a polymer material, a liquid, a gaz. The second dielectric material may preferentially (but not necessary) be in a solid state (e.g. glass, plastic or a polymer material), for example so as to contain a first dielectric material in a form of gaz or liquid. Under certain conditions, it has been shown, in line with the concept known as "effective index model", that such a composite dielectric material behaves as an homogeneous dielectric material having its own refractive index - referred to as an *effective refractive index* $n_{eff}$ - which can be defined as a function of said first and second refractive indexes $n_1$ and $n_2$ and as a function of a fill factor of said first dielectric material within said second dielectric material. The composite dielectric material is then sometimes referred to as an *effective medium.*

According the disclosure, the proposed nanojet microlens is further arranged so that a bottom surface and a lateral surface of said portion of a composite dielectric material form together an edge, the bottom surface being defined with respect to an arrival direction of the incident electromagnetic wave illuminating the device. Such a topology allows, as a result of the combination of electromagnetic phenomena previously described in relation with prior art, generating at least one focused beam originating from the edge between said bottom and lateral surfaces, when the device is illuminated by an electromagnetic wave. The focused beam generated by the proposed device is characterized by:

- its orientation: the beam axis forms an angle with respect to the incident wave propagation direction, with a typical deviation angle $10<\theta_B<40$ degrees;
- its dimensions: the beam width in a plane orthogonal to the beam axis is smaller than the wavelength of the incident electromagnetic wave in the host medium;
- its intensity: the beam intensity presents a field intensity enhancement of at least a factor of two compared to the incident electromagnetic wave.

As an illustration of the above-introduced general principle, **Figure 3** shows an example of an optically-transparent device ML according to an embodiment of the present disclosure. The optically-transparent device ML is embedded in a dielectric host medium (refractive index $n_h$), and is placed on a dielectric substrate (refractive index $n_s$). It is illuminated by an electromagnetic wave EM coming from the bottom (i.e. orthogonal to a base surface of the device). The device ML comprises a portion $P_{eff}$ of a composite dielectric material as previously defined, associated with an effective refractive index $n_{eff}$. The width $W_0$ of portion $P_{eff}$ is comprised between $\lambda/2$ and $10\lambda$, with $\lambda$ the wavelength of the electromagnetic wave in the dielectric host medium. In the particular example of figure 3, the device ML also comprises a portion $P_b$ of a dielectric material (refractive index $n_b$). Materials are chosen so that $n_h < n_{eff} < n_b$. In accordance with nanojet beam-forming principles introduced in relation with prior art, a nanojet beam NJ is generated at the interface between portions $P_{eff}$ and $P_b$ of the device ML, originating from the edge between the bottom surface of the device (with respect to the arrival direction of the incident electromagnetic wave EM) and the lateral surface separating the two portions $P_{eff}$ and $P_b$. It should be noted that other nanojet beams - not represented on figure 3 for sake of clarity - are also generated respectively at the interface between portion $P_{eff}$ and the host medium, and at the interface between portion $P_b$ and the host medium. The nanojet beam NJ is characterized by its radiation angle $\theta_B$, which depends only on the ratio $n_b/n_{eff}$ in case of a base angle equal to 90°, as shown by equation Eq.2 introduced in relation with prior art.

It follows from the foregoing that the use of a composite dielectric material in the design of a nanojet microlens is of great interest. Indeed, varying morphology of inclusions of the first dielectric material into the second dielectric material makes it possible to play on the fill factor and to control the effective refractive index $n_{eff}$ of the resulting composite dielectric material. For example, it is possible to modify refractive index of a bulk dielectric material by creating narrow grooves, through-holes, or cavities in the mass of the material, as described later in the present document. It that way, one can obtain a composite dielectric material having an effective refractive index $n_{eff}$ which is different than refractive indexes classically available with standard dielectric material. This offers access to an extended-range of possible index ratio at an interface between the effective medium and another region and, incidentally, to an extended range of radiation angle $\theta_B$ available for the generated nanojet beam. In particular, whereas the nanojet radiation angle can vary in a limited range of about 17 to 30 degrees for a conventional nanojet microlens made of standard homogeneous dielectric materials (with refractive indexes varying in the range between 1.2 to 2), the use of an effective medium allows reaching an extended range of radiation angle of about 10 to 40 degrees.

The proposed technique thus provides an additional degree of freedom in the design and fabrication of nanojet microlenses. In particular, it allows for the fabrication of nanojet microlenses with longer focal length, which is not feasible or difficult to provide using standard dielectric materials. As it will be described later, it can also be used for the fabrication of complex nanojet beam-forming components comprising a plurality of regions with different refractive indexes.

### 5.2 Description of detailed embodiments

Various embodiments for implementing a nanojet microlens according to the present disclosure are now described. As it will described hereafter, the proposed technique enables fine-tuning of the nanojet lens performance characteristics by:

- varying the way the composite dielectric material is formed (implementation of the effective index model); and/or
- varying the topology of the microlens itself (investigated through simulation tools) .

Effective index model implementation

As previously described, a composite dielectric material according to the disclosure is formed by inclusions of a first dielectric material having a first refractive index $n_1$ into a second dielectric material having a second refractive index $n_2$ different from the first refractive index $n_1$, in such a way that said composite dielectric material behaves as an homogeneous dielectric material having a effective refractive index $n_{eff}$.

Two ways for implementing such a composite dielectric material (also called effective medium) are now described in relation with figures 3a and 3b: a porous implementation and a stratified implementation.

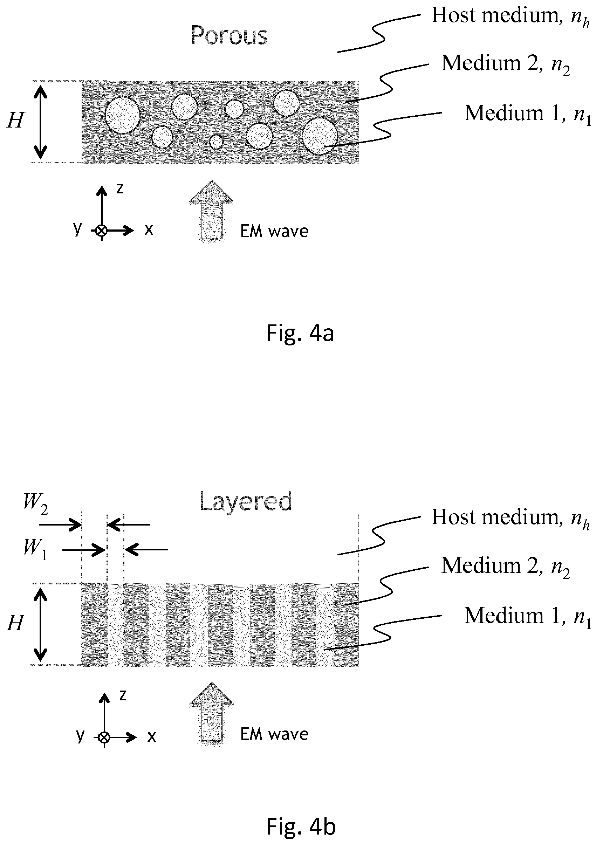

In the porous implementation described in relation with **figure 4a,** some cavities are created within the volume of a bulk material (second dielectric material). For example, the inclusions take the form of substantially spherical cavities (i.e. pores) filled with the first dielectric material (Medium 1) and randomly distributed within said second dielectric material (Medium 2), the diameter of each of said cavities being smaller than $\lambda/2$. Since the cavities have thus dimensions much smaller that one half of the wavelength of the electromagnetic wave in the host medium, the impact of their shape can be neglected. More specifically, according to the effective index model, optical properties of such a dielectric material with sub-wavelength inclusions of another dielectric material can be characterized by means of an effective refractive index $n_{eff}$, which can be defined as a weighted average of the refractive indexes of the two materials. In case of two-phase mixture of non-absorbing materials, a simple Volume Averaging Theory (VAT) can be used, and the effective refractive index can be defined by the formula:

$$(Eq.3) \qquad n_{eff} = (\phi n_1^2 + (1 - \phi)n_2^2)^{1/2}$$

where $\phi \in [0,1]$ is the fill factor, representing the fraction of first dielectric material having refractive index $n_1$ imbedded in second dielectric material having refractive index $n_2$.

In the layered implementation described in relation with **figure 4b,** the composite dielectric material is a stratified medium, the inclusions taking the form of layers of said first dielectric material (Medium 1) interleaved between layers of said second dielectric material (Medium 2). In other words, the composite dielectric material comprises alternating dielectric layers of respective refractive indexes $n_1$ and $n_2$.

In such a case, according to the effective index model, it has been shown that the effective refractive index of the composite dielectric material depends not only on structure parameters of the layers (refractive indexes, thickness), but also on polarization of the electromagnetic wave illuminating the stratified medium. For example, when the stratified medium is illuminated by a plane wave from below, as represented on figure 4b, with E-vector oriented along y-direction (i.e. parallel to the layers) denoted as TE polarization and with M-vector oriented along x-direction (orthogonal to the layers) denoted as TM polarization, two effective refractive indexes $n_\parallel$ (for TE polarization) and $n_\perp$ (for TM polarization) can be associated with the composite dielectric material:

$$(Eq.4a) \qquad n_\parallel = (\phi n_1^2 + (1 - \phi)n_2^2)^{1/2}$$

$$(Eq.4b) \qquad n_\perp = \frac{1}{\left(\phi \frac{1}{n_1^2} + (1 - \phi)\frac{1}{n_2^2}\right)^{1/2}}$$

where $\phi = W_1/(W_1 + W_2)$ is the fill factor of the stratified medium comprising alternating dielectric layers with refractive indexes $n_1$ and $n_2$ and thickness $W_1$ and $W_2$, respectively.

It can be noted that equation Eq.4a coincides with equation Eq.3.

According to the effective index model, equations Eq.4a and Eq.4b for a stratified medium are valid in a deep-sub-wave-length regime, when the wavelength of the incident wave is much larger than the period of the structure, i.e.

$$\frac{\lambda}{W_1+W_2} > n = \max\{n_1,n_2\}.$$

As may be observed from the above, whatever the way the composite dielectric material is implemented (porous or stratified), the effective refractive index depends on the fill factor of the first dielectric material within said second dielectric material. Thus, by varying parameters such a size, shape, spacing, thickness of the inclusions, one can obtained, from conventional dielectric materials, a composite dielectric material having an effective refractive index that does not belong to the range of refractive indexes available with conventional bulk dielectric materials.

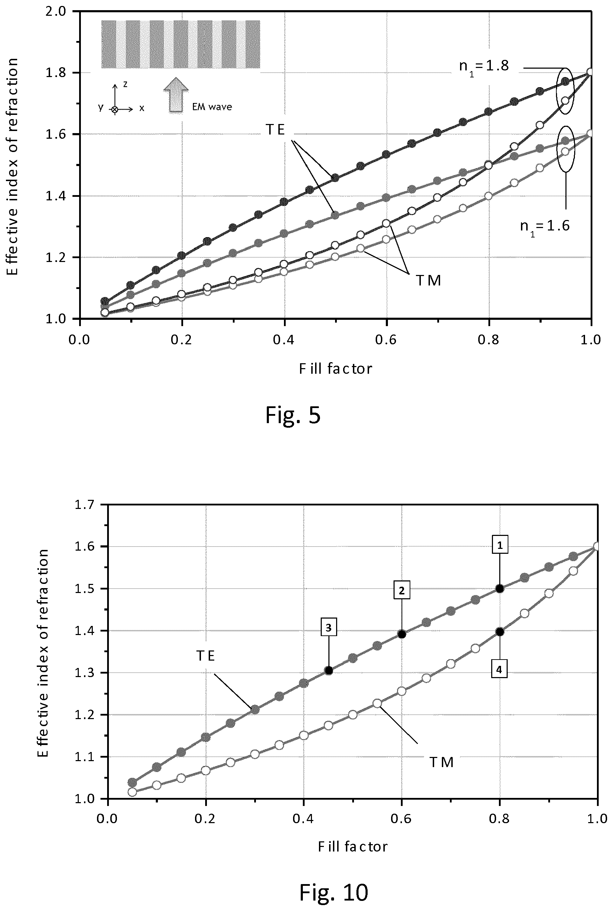

For example, **figure 5** shows dependence of the effective refractive index versus fill factor for a stratified medium in which the alternating layers are implemented by creating grooves filled with air (refractive index $n_2 \approx 1$) within a bulk material having refractive index $n_1$. Two different cases, corresponding to two different bulk materials, are illustrated: $n_1 = 1.6$ and $n_1 = 1.8$. As may be observed, and as previously presented, the effective index value depends on the polarization of the incident electromagnetic wave, which means that a stratified effective medium is intrinsically birefringent. It can also be noted that for both polarizations TE and TM, the effective refractive index varies in between $n_2$ (i.e. 1) and $n_1$.

Even some values of effective refractive index may not be obtained in practice due to some fabrication constraint (e.g. it may be difficult to fabricate narrow grooves or pillars with large height/width ratio), it follows from the foregoing that the proposed technique offers a way to overcome some limitations of current nanojet microlenses, the effective index model providing additional degree of freedom for the design and fabrication of nanojet microlenses (mainly by enabling fine control of the index ratio which governs nanojet beam radiation angle, but also by enabling new applications relying for example on birefringence properties of particular effective medium).

*Simulation results*

A 3D Finite-Difference Time-Domain (FDTD) method to is now used to simulate different embodiments of the proposed effective refractive index based nanojet microlens, and to analyse the data obtained.

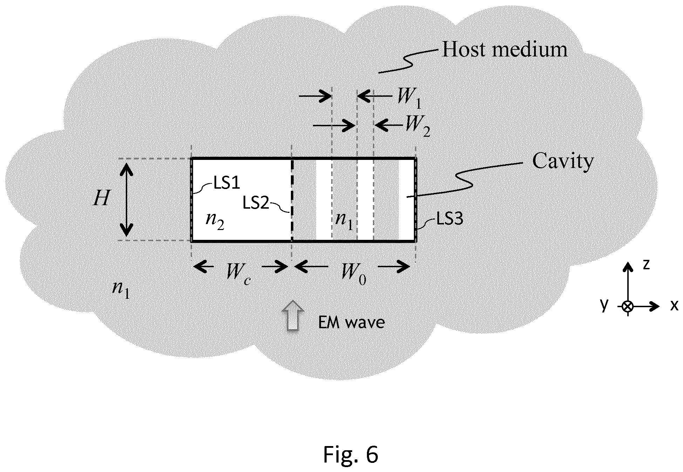

**Figure 6** illustrates an embodiment of the present disclosure, where the nanojet beam-forming element is in a form of a hollow cavity created in a homogeneous dielectric medium with refractive index $n_1$ and partly filled in with another dielectric medium (e.g. air) with refractive index $n_2$ lower than $n_1$. The device is illuminated by a TE-polarized plane wave from below. In the proposed embodiment, the cavity is divided into two portions: a first portion of width $W_0$ filled with an effective medium such as a layered medium as already presented in relation with figure 4b, and a second portion of width $W_c$ which remains fully filled with the dielectric medium having refractive index $n_2$. The first portion, the second portion and the host medium thus define three lateral surfaces LS1, LS2 and LS3. The effective medium comprises 2N alternating dielectric layers with equal thickness ($W_1=W_2 \sim \lambda_0/5n_1$, where $\lambda_0$ is the free space wavelength of the electromagnetic wave illuminating the device). Alternating layers refractive indexes are $n_1$ and $n_2$, equal to those of the host medium and cavity fill materials, respectively.

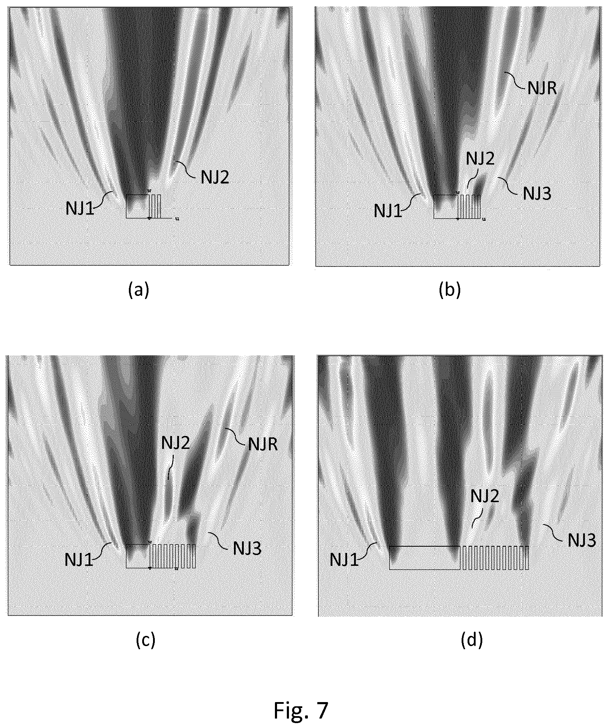

Some simulation results for different number 2N of alternating dielectric layers are presented in relation with **figure 7.** More particularly, figure 7 shows power density distribution in the xz-plane of the nanojets generated by illuminating from bottom a microlens by a plane wave at $\lambda$=450nm (wavelength in the host medium), the microlens having the following characteristics: $n_1$=1.6, $n_2$=1, H=$W_C$=500nm, $W_1$=$W_2$=60nm. Images (a), (b), (c) and (d) correspond to different length of the first portion of width $W_0$ filled with an effective medium: (a) *N*=2, (b) *N*=4, (c) *N*=8, (d) *N*=12. According to equation Eq.4a and figure 5, under these conditions, the effective refractive index of the stratified medium is $n_\parallel$=1.33 (TE polarization, fill factor $\phi$ = 0.5).

Analysis of figure 7 shows that the cavity can be considered as being constructed of two independent counterparts with corresponding refractive indexes $n_2$ and $n_\parallel$ as soon as the size of each part is larger than the wavelength in the host medium, namely:

$$W_c > \lambda_0/n_1 \text{ and } W_0 = N(W_1 + W_2) > \lambda_0/n_1$$

If size of any of the constitutive parts is smaller than the wavelength in the host medium (figure 7a), an asymmetrical pattern is created: two independent nanojet beams NJ1 and NJ2 are observed, with NJ2 an enhanced nanojet beam tilted towards smaller $\theta_B$ values.

If the size of the constitutive parts is larger than the wavelength in the host medium (figures 7b, 7c and 7d), three independent nanojet beams NJ1, NJ2 and NJ3 are generated, with nanojet deviation angles well predicted by equation Eq.2 applied at each of the three lateral surfaces LS1, LS2 and LS3, and using the equation Eq.4a for characterization of the effective index of refraction of the stratified medium. One can also observed on figures 6b and 6c an enhanced nanojet beam NJR resulting from the recombination of nanojet beams NJ2 and NJ3.

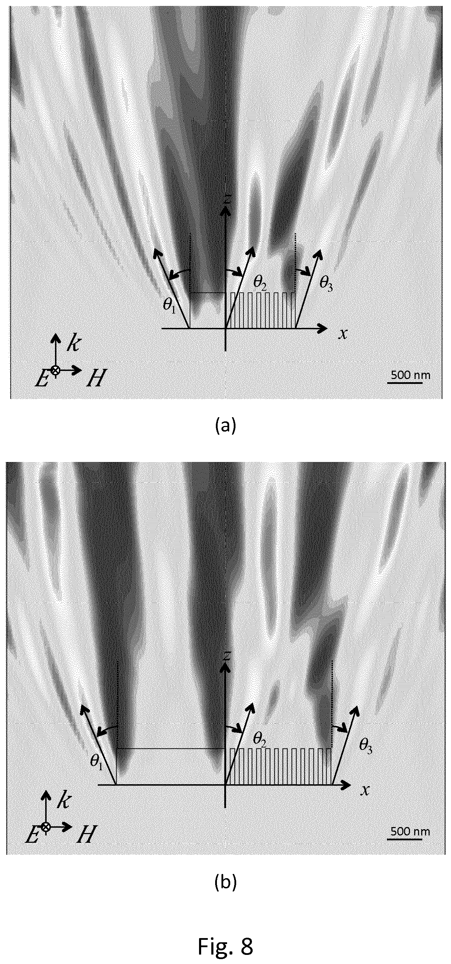

Zoom of field intensity patterns for two different configurations of the cavity is provided in **figure 8,** with nanojet beams highlighted by black arrows. More particularly, figure 8a is the same as figure 7c (N=8), and figure 8b is the same as figure 7d (N=12). The values of the nanojet radiation angle predicted by equation Eq.2 on one hand, and extracted from figure 8 on the other hand, are reported in the following table, and compared.

| Interface | Index ratio | Theta | Predicted by Eq.2 | Simulated |
|---|---|---|---|---|
| LS1 | $n_1/n_2$ =1.6 | $\theta_1$ | 25.7 | 25.8 |
| LS2 | $n_\parallel/n_2$=1.33 | $\theta_2$ | 20.6 | 20.3 |
| LS3 | $n_1/n_\parallel$=1.2 | $\theta_3$ | 16.8 | 18.0 |

As it can be observed on figures 8a and 8b, the simulated values of the nanojet beam radiation angle are the same for both configurations, which was expected since the fill factor remains the same for the two configurations. For the selected parameters of the nanojet beam-forming element, the deviation between predicted and simulated radiation angle does not exceed 1.2 degree, which is considered as acceptable and confirms the validity of the proposed general principle, at least for these dimensions of the nanojet microlens.

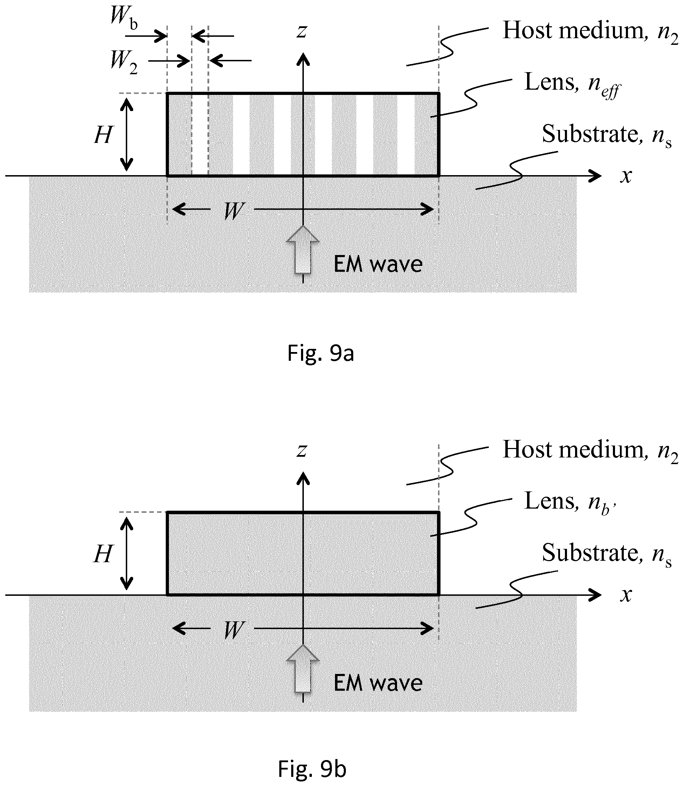

Another embodiment of the proposed disclosure is now described in relation with **figure 9a.** In this embodiment, a nanojet microlens takes the form of a single portion of stratified medium as illustrated on figure 4b. The structure is assumed infinite along y-axis. The stratified medium is embedded in a host medium having a refractive index $n_2$, and is lying on a substrate layer having a refractive index $n_S$. The substrate material can be selected arbitrary, e.g. $n_S$=1. The stratified medium comprises alternating dielectric layers having refractive indexes $n_b$ and $n_2$. As previously presented in relation with figure 4b, it thus behaves as an effective medium having an effective refractive index $n_{eff}$ ($n_\parallel$ or $n_\perp$ depending on the polarization of the incident electromagnetic wave), which may be defined as a function of $n_b$, $n_2$, and of the fill factor. The simulated performance of the nanojet microlens of figure 9a is compared with that of a nanojet microlens having the same dimensions, but made entirely of a homogeneous dielectric material with simulated refractive index $n_{b'}$, such as the one illustrated in relation with **figure 9b,** $n_{b'}$ being chosen so that $n_{b'}= n_{eff}$. Like the nanojet microlens of figure 9a (referred to hereafter as effective index nanojet microlens), the nanojet microlens of figure 9b (referred to hereafter as bulk nanojet microlens) is embedded in a host medium having a refractive index $n_2$, and is lying on a substrate layer having a refractive index $n_3$.

The comparison is made for different lens configurations. More particularly, refractive indexes $n_b$ and $n_2$ are set to remain constant, with $n_b$=1.6 and $n_2$=1, but the fill factor is modified so as to obtain a desired effective refractive index for the stratified medium. To this end, the diagram of **figure 10** showing dependence of the effective index of refraction versus fill factor for a stratified medium comprises alternating dielectric layers having refractive index $n_b$=1.6 and $n_2$=1 may be used. The numerical marks 1, 2, 3 and 4 on this diagram correspond to microlens configurations simulated.

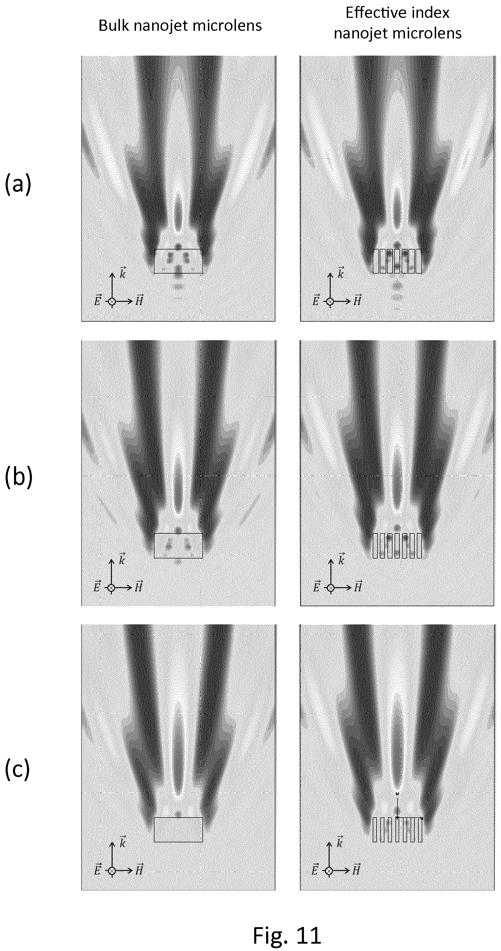

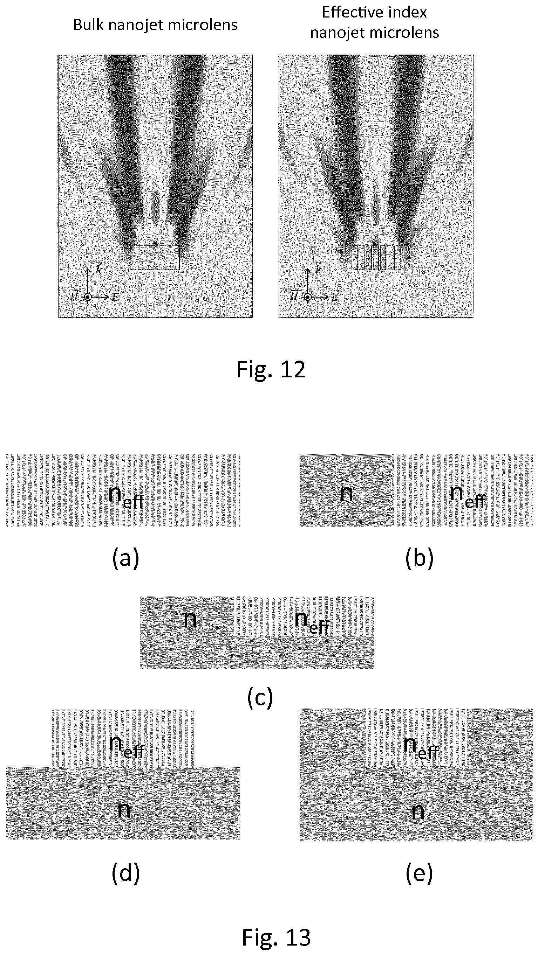

Results of the simulation are presented in relation with figures 11 and 12. More particularly:

- **figure 11** shows the simulated near field intensity patterns for the bulk (left) and effective index (right) nanojet microlenses illuminated by a TE-polarized plane wave at λ=450nm (wavelength in the host medium) from below, with:

  (a) $n_{b'}$ = $n_{\parallel}$ = 1.5 (fill factor = 0.8, numerical mark 1 on figure 10);

  (b) $n_{b'}$ = $n_{\parallel}$ = 1.4 (fill factor = 0.6, numerical mark 2 on figure 10);

  (c) $n_{b'}$= $n_{\parallel}$ = 1.3 (fill factor = 0.45, numerical mark 3 on figure 10);

- **figure 12** shows the simulated near field intensity patterns for the bulk (left) and effective index (right) nanojet microlenses illuminated by a TM-polarized plane wave at λ=450nm (wavelength in the host medium) from below, with $n_{b'}$ = $n_{\perp}$ = 1.4 (fill factor=0.8, numerical mark 4 on figure 10).

As may be observed on figures 11 and 12, for each microlens configuration, the field intensity patterns obtained with an effective index nanojet microlens (right images) is very similar to the field intensity patterns obtained with a bulk nanojet microlens (left images) having a corresponding refractive index. Analysis of figures 11 and 12 thus confirms applicability of the effective index model (as defined by equations Eq.4a and Eq.4b) for the design of effective index nanojet microlenses with performance characteristics similar to those of a nanojet lens made of a homogeneous dielectric material with a corresponding refractive index. It can be noted that the model works for both polarizations TE and TM, provided the appropriate equation from the pair of equation Eq.4a and Eq.4b is selected.

### 5.3 Advantages of the proposed technique and practical application

According to an aspect of the present disclosure, a nanojet microlens comprising at least one portion of a composite dielectric material formed so as to have an effective refractive index has been described. As explained throughout the document, such an effective refractive index based nanojet microlens offer new possibilities for managing performance of the generated nanojet beams, when compared to current nanojet microlenses. More particularly, by varying the size, shape, and spacing of the inclusions (grooves, holes, cavities, layers) of a first dielectric material into a second dielectric material, different effective refractive index values can be provided, giving access to an extended-range of possible index ratio at an interface between the portion of a composite dielectric material (i.e. the effective medium having the effective refractive index) and another region having a different refractive index (for example, the host medium into which the device is embedded, or another portion of the device). The range of radiation angles of the nanojet beams that can be generated with the proposed device is thus extended. This enables fine-tuning of the nanojet lens performance characteristics, such as nanojet beam direction, focal length, and focusing efficiency (i.e. field intensity enhancement). In particular, this allows fabricating nanojet microlenses with longer focal length, or modifying the focal length of a fixed-size microlens, which may be of critical interest for some applications like image sensors design.

The proposed technique can also be used for the fabrication of complex nanojet beam-forming components comprising two (or more) elements with different effective refractive indexes. Such components can provide symmetrical or non-symmetrical nanojet beams depending on their topology. **Figure 13** illustrates schematic views (vertical cross-section) of possible embodiments of a microlens according to the proposed technique: (a) symmetrical single-layer and single-material topology, (b) asymmetrical single-layer and double-material topology, (c) asymmetrical double-layer and double-material topology, (d) and (e) symmetrical double-layer and double-material topology.

According to another aspect of the present disclosure, at least one effective refractive index nanojet microlens of the proposed technique is embedded in a dielectric host medium.

In one embodiment, the dielectric host medium is in a solid state (e.g. glass, plastic, polymer material), and the portion of a composite dielectric material of the microlens is formed by arranging a plurality of cavities within said dielectric host medium. Figure 6, previously described, shows an example of such an embodiment.

In another embodiment, notably in cases where the host medium is not in a solid state, the nanojet microlens is possibly placed on a dielectric substrate acting as a support layer, whose material can be selected arbitrary. Figure 9a, previously described, shows an example of such an embodiment.

The proposed technique thus provides high flexibility for the implementation of a nanojet microlens component, with high-adaptability to various host medium constraints.

In one embodiment, several nanojet microlenses according to the proposed technique are uniformly distributed within the dielectric host medium, so as to form a regular two-dimensional or three-dimensional pattern. Such an embodiment may notably allow far-field applications, as mentioned below.

The simplification of the fabrication of nanojet microlens is another important aspect of the present disclosure. Indeed, with the proposed technique a nanojet-based beam-forming structure comprising a plurality of counterparts with different refractive indexes can for example easily be obtained from a single dielectric bulk material, by creating grooves, through-holes, or cavities only in some targeted portion of said bulk material. Such a structure can be fabricated using established microfabrication technique, such as E-beam and UV/DUV lithography or nanoimprinting.

The nanojet microstructure may comprise one or more nanojet beam-forming elements arranged in one plane (i.e. at a surface of a single plate). Preferably, the element should be placed far enough from each other to avoid electromagnetic coupling (i.e. at least a few wavelengths in the host medium). Thanks to this, each microcavity will produce an independent nanojet beam, whose parameters (beam width and deviation angle) will depend on parameters of the corresponding microcavity and its illumination conditions. If placed closer, a collective response is possible.

Such arrays may serve as advanced analogs of diffraction gratings for various types of optical devices. In this case, the collective response of a plurality of such nanojet elements can be used to create a desired far-field pattern.

In one embodiment, such a component can have a form of a plate made of an optically transparent material (e.g. glass, plastic, polymer) with a nanojet microstructure created on one of its surfaces. The plate can be planar, or curved, flexible (bendable).

The plate can be made of a single material or comprise several layers. The former option (single material) is more suitable for resist-free molding fabrication methods, whereas the latter (layered) is more relevant to E-beam and UV direct-write and lithography techniques.

In some embodiments, the plate with a nanojet microstructure can be attached to another component, e.g. another dielectric plate acting as an optical waveguide or a plano-convex lens. In such case, the nanojet microstructure may occur outside (i.e. on the external surface of the compound component) or inside (i.e. at the interface between the two attached components).

Multi-layer structures with two or more arrangements of nanojet microcavities arranged in different horizontal planes are also possible.

In some embodiments, it may be preferable to arrange the nanojet element in a form of an array (with a regular or irregular layout). Such an array may comprise any number of identical or non-identical elements (in terms of size, shape, orientation, and/or effective index). For instance, it can comprise identical nanojet elements with different orientation or array of groups of nanojet cavities arranged in accordance to some rule in order to produce a more complex optical function. This can be a certain near-field pattern or a larger-scale focused beam, produced as a result of recombination of independent nanojet beams associated with different edges of the microstructure, that extends beyond the near-zone of a single nanojet beam-forming element.

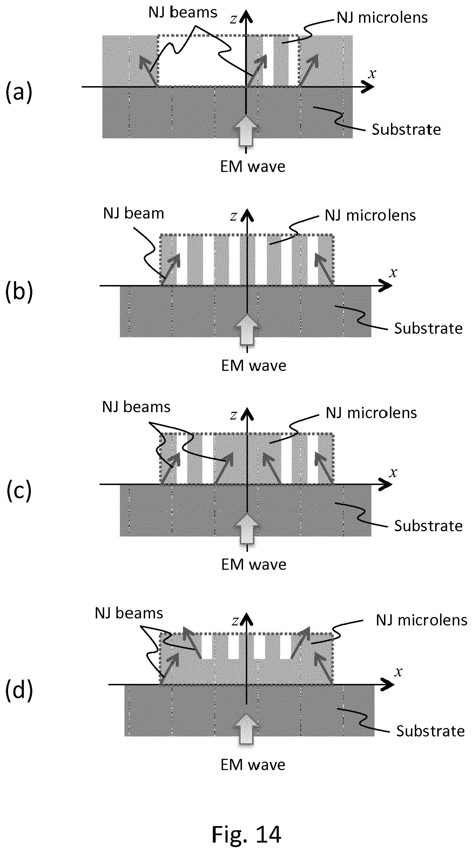

The topology of the nanojet cavity can also be generalized towards a more complex structure comprising two or more counterparts characterized by different effective indexes. **Figure 14** illustrates schematic views (vertical cross-section) of such possible embodiments of a microlens comprising two or more counterparts. Here, it is assumed that grooves are hollow and filled in with a host medium having refractive index lower than that of the lens bulk material (e.g. air). Arrows schematically show the nanojet beams generated by the microlenses, when illuminated from below. Such microstructures can be designed to produce more complex optical functions, e.g. for generating multi-beam patterns in the near and/or far field zones. They may also be used for gaining additional degrees of freedom for near-field patterning and/or for simplifying the fabrication/assembly process.

## Claims

1. An optically-transparent device (ML) being configured for forming at least one focused beam (NJ) in a near field zone of said device from an electromagnetic wave (EM) incidentally illuminating said device, when said device is embedded in a dielectric host medium, **wherein** said device comprises at least one portion ($P_{eff}$) of a composite dielectric material, formed by inclusions of a first dielectric material having a first refractive index $n_1$ into a second dielectric material having a second refractive index $n_2$ different from the first refractive index $n_1$, a dimension of each of said inclusions in at least one direction being smaller than $\lambda/2$, $\lambda$ being the wavelength of said electromagnetic wave in said dielectric host medium, so that said composite dielectric material has an effective refractive index $n_{eff}$

defined as a function of said first and second refractive indexes and as a function of a fill factor of said first dielectric material within said second dielectric material, **and wherein** at least one of said at least one focused beam originates from an edge between a bottom surface and a lateral surface of said at least one portion of a composite dielectric material, the bottom surface being defined with respect to an arrival direction of said electromagnetic wave.

2. The optically-transparent device according to claim 1, **wherein** a width $W_0$ of said at least one portion is configured so that $\lambda/2 \leq W_0 \leq 10\lambda$.

3. The optically-transparent device according to claims 1 or 2, **wherein** said inclusions take the form of grooves, through-holes, or cavities within said second dielectric material, said grooves, holes, or cavities being filed with said first dielectric material.

4. The optically-transparent device according to claim 3 wherein said inclusions take the form of substantially spherical cavities randomly distributed within said second dielectric material, the diameter of each of said cavities being smaller than $\lambda/2$.

5. The optically-transparent device according to claim 1 or 2, **wherein** said composite dielectric material is a stratified medium, the inclusions taking the form of layers of said first dielectric material interleaved between layers of said second dielectric material.

6. The optically-transparent device according to claim 5, **wherein** said stratified medium is configured so that $W_1+W_2 < \lambda/\max(n_1,n_2)$, where $W_1$ and $W_2$ corresponds respectively to the thickness of each layer of said first dielectric material and to the thickness of each layer of said second dielectric material.

7. The optically-transparent device according to any one of claims 1 to 6, **wherein** said first dielectric material belongs to the group comprising:

   - glass;
   - plastic;
   - a polymer material;
   - a liquid;
   - a gas.

8. The optically-transparent device according to any one of claims 1 to 7, **wherein** said second dielectric material belongs to the group comprising:

   - glass;
   - plastic;
   - a polymer material.

9. The optically-transparent device according to any one of claims 1 to 8, **wherein** said device comprises at least another portion of a dielectric material, at least a surface of said another portion being in contact with a surface of said one portion of a composite dielectric material, and said another portion having a refractive index different from the effective refractive index $n_{eff}$ of said one portion of a composite dielectric material.

10. The optically-transparent device according to claim 9, **wherein** said another portion of a dielectric material is made of one of the first or second dielectric material.

11. A system comprising a dielectric host medium and at least one optically-transparent device according to any one of claims 1 to 9 embedded into said dielectric host medium.

12. The system according to claim 11 **wherein** said dielectric host medium is in a solid state, and wherein the at least one portion of a composite dielectric material of said optically-transparent device is formed by arranging a plurality of cavities within said dielectric host medium.

13. The system according to claim 11 **wherein** said system comprises a dielectric substrate acting as a support layer and wherein said at least one optically-transparent device is placed on said dielectric substrate.

14. The system according to any one of claims 11 to 13 **wherein** said system comprises a plurality of optically-transparent devices according to any one of claims 1 to 9, said optically-transparent devices being uniformly distributed within said dielectric host medium so as to form a regular two-dimensional or three-dimensional pattern.

Fig. 1

Fig. 2a

**Fig. 2b**

**Fig. 3**

Fig. 4a

Fig. 4b

Fig. 5

Fig. 10

Fig. 6

(a)

(b)

(c)

(d)

Fig. 7

(a)

(b)

Fig. 8

$W_b$

$W_2$

$z$

Host medium, $n_2$

Lens, $n_{eff}$

Substrate, $n_s$

$H$

$x$

$W$

EM wave

Fig. 9a

$z$

Host medium, $n_2$

Lens, $n_b$,

Substrate, $n_s$

$H$

$x$

$W$

EM wave

Fig. 9b

Bulk nanojet microlens

Effective index
nanojet microlens

(a)

(b)

(c)

Fig. 11

Bulk nanojet microlens

Effective index
nanojet microlens

Fig. 12

(a)

(b)

(c)

(d)

(e)

Fig. 13

Fig. 14

Europäisches
Patentamt

European
Patent Office

Office européen
des brevets

# EUROPEAN SEARCH REPORT

Application Number

EP 18 19 8053

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Soon-Cheol Kong ET AL: "Quasi one-dimensional light beam generated by a graded-index microsphere References and links 5 / OPTICS EXPRESS 3722", Opt. Lett. J. Opt. Soc. Am. A Opt. Lett. Opt. Lett. J. Appl. Phys. Opt. Express Opt. Express Jan Jan Opt. Express Appl. Phys. Lett. Nat. Nanotech. U.S. Patent Opt. Express Opt. Express Opt. Express IEEE Microwave Wireless Comp. Lett. U.S. Patent Appl, 1 January 2005 (2005-01-01), pages 526-533, XP055232213, Retrieved from the Internet: URL:https://www.osapublishing.org/DirectPDFAccess/7341C2CB-9CCC-736C-6E6459F00B6BBEBB_176866/oe-17-5-3722.pdf?da=1&id=176866&seq=0&mobile=no * paragraphs [0001], [0002] * * figure 1 * | 1-14 | INV. G02B5/18 G02B1/00 G02B1/04 |
| A | EP 3 312 646 A1 (THOMSON LICENSING [FR]) 25 April 2018 (2018-04-25) * the whole document * | 1-14 | TECHNICAL FIELDS SEARCHED (IPC) G02B |

The present search report has been drawn up for all claims

| Place of search | Date of completion of the search | Examiner |
|---|---|---|
| Munich | 15 July 2019 | Denise, Christophe |

EPO FORM 1503 03.82 (P04C01)

## ANNEX TO THE EUROPEAN SEARCH REPORT
## ON EUROPEAN PATENT APPLICATION NO.

EP 18 19 8053

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2019

| Patent document cited in search report | | Publication date | Patent family member(s) | | Publication date |
|---|---|---|---|---|---|
| EP 3312646 | A1 | 25-04-2018 | CN | 109844579 A | 04-06-2019 |
| | | | EP | 3312646 A1 | 25-04-2018 |
| | | | WO | 2018073407 A1 | 26-04-2018 |

EPO FORM P0459

For more details about this annex : see Official Journal of the European Patent Office, No. 12/82

**EP 3 633 421 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3223063 A